# EUROPEAN PATENT APPLICATION

(11) **EP 3 910 699 A1**
(43) Date of publication of application: **17.11.2021**
(21) Application number: 20174163.4
(22) Date of filing: 12.05.2020
(51) Int. Cl.: H01M 2/10, B60L 50/50, H01M 10/42

(54) **BATTERY SYSTEM AND VEHICLE INCLUDING THE BATTERY SYSTEM**

(71) Applicant: Samsung SDI Co., Ltd., Gyeonggi-do 17084 (KR)
(72) Inventor: REINPRECHT, Wolfgang, 8144 Attendorf (AT); PUCHER, Matthias, 8403 Lebring (AT); KOJC, Miran, 8071 Hausmannstätten (AT); ERHART, Michael, 8054 Seiersberg-Pirka (AT)
(74) Representative: Gulde & Partner

(57) **Abstract**

The present invention refers to a battery system (10), the battery system (10) comprising a plurality of battery cells (12) and a battery housing (20), wherein the battery housing (20) comprises a chamber (22) arranged between a bottom cover (24) and top cover (26) of the battery housing (20), wherein the chamber (22) accommodates the plurality of battery cells (12); and at least one sidewall member (30) connecting the bottom cover (24) and the top cover (26), wherein the at least one sidewall member (30) extends along an outer boundary of the chamber (22) and comprises a channel (32) inside the sidewall member (30) and apertures (34) connecting the chamber (22) with the channel (32), wherein the apertures (34) are arranged in a top half (35) of the channel (32) such that at least a bottom half (33) of the channel (32) is adapted for collecting solid matter; wherein the battery system (10) is adapted such that in case of a thermal runaway (16), a venting gas vented from at least one of the battery cells (12) is directed along at least one venting path (37) leading from the chamber (22), through at least one of the apertures (34) and the channel (32) within the at least one sidewall member (30) to an environment (39) of the battery system (10).

## Description

### Field of the Invention

The present invention relates to a battery system configured for separating solid matter from venting gas in case of a thermal runaway. Further, the present invention relates to a vehicle comprising the battery system.

### Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid electric vehicle (hybrid vehicle) powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid electric vehicles and the like.

In general, rechargeable batteries include an electrode assembly including a positive electrode, a negative electrode and a separator interposed between the positive and negative electrodes, a case receiving the electrode assembly, and an electrode terminal electrically connected to the electrode assembly. An electrolyte solution is provided in the case in order to enable charging and discharging of the battery via an electrochemical reaction of the positive electrode, the negative electrode, and the electrolyte solution. The shape of the case, e.g. cylindrical or rectangular, depends on the battery's intended purpose. Battery cells with rectangular cases are also known as prismatic battery cells. Lithium-ion (and similar lithium polymer) batteries, widely known via their use in laptops and consumer electronics, dominate the most recent group of electric vehicles in development.

A battery module may be formed of a plurality of unit battery cells, by connecting their electrode terminals in series and/or in parallel so as to provide a desired voltage.

A battery (also called battery pack) is a set of any number of (preferably identical) battery modules or battery cells. They may be connected in series, parallel or a mixture of both to deliver a desired voltage.

The mechanical integration of such a battery requires appropriate mechanical connections between the individual components, e.g. of battery modules or battery cell rows, and a supporting structure of the vehicle. The battery modules or battery cell rows may be confined by cell holders (fastening side plates) to (lateral) sidewall members of the carrier framework. Further, a top cover and bottom cover (housing cover plates) may be fixed atop and below the battery modules or battery cell rows.

The carrier framework of the battery is mounted to a carrying structure of the vehicle. In case the battery shall be fixed at the bottom of the vehicle, the mechanical connection may be established from the bottom side by for example bolts passing through the carrier framework of the battery. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle.

To provide thermal control of the enclosed battery cells within the battery housing a thermal management system may be used to efficiently emit, discharge and/or dissipate heat generated within the battery housing. In certain conditions of the battery cells an increase of the internal temperature can lead to abnormal reactions occurring in the battery cells. An example of such abnormal operation conditions is a thermal runaway in a battery cell that may be entered by a strongly overheated or overcharged cell. The thermal runaway is a self-accelerating chemical reaction inside the battery cell, which produces high amounts of heat and venting gas, until all available material is exhausted. The exhausted material (venting products) may comprise hot and toxic venting gas as well as conductive solid matter (material) like graphite powder and metal fragments.

A thermal runaway can cause a thermal propagation along the battery cells of a battery module or battery, which might eventually lead to a fire.

A state of the art venting concept of a battery is to let the hot venting gas of a battery cell in thermal runaway condition expand into the battery housing and escape through a housing venting valve to the outside (the environment of the battery housing).

As the hot venting gas may also include metallic parts of the battery cell as well as graphite, the thermal runaway in one battery cell could cause short circuits and thus a consecutive thermal runaway of other battery cells leading into a complete damage of the battery (the battery pack), the battery system and the vehicle.

The pollution caused by graphite and metallic parts can affect most of the battery cells or battery modules of a battery and lead to short circuits, because all battery cells or modules are within the same battery housing. Depending on the location of the battery cell in thermal runaway with respect to the housing venting valve, different air streams might develop and cause different portions of the battery to be affected.

It is thus an object of the present invention to overcome or reduce at least some of the drawbacks of the prior art and to provide an improved thermal runaway handling.

### Summary of Invention

Embodiments of the present disclosure seek to solve at least one of the problems existing in the prior art to at least some extent. In particular, a battery system for a vehicle is provided comprising a plurality of battery cells and a battery housing.

The battery housing comprises a chamber arranged between a bottom cover and a top cover of the battery housing, wherein the chamber accommodates the plurality of battery cells. Therefore, a top of the chamber may be sealed by the top cover which constitutes an upper housing cover, while a bottom of the chamber may be sealed by the bottom cover which constitutes a lower housing cover.

The battery housing further comprises at least one sidewall member connecting the bottom cover and the top cover, wherein the at least one sidewall member extends along an outer boundary of the chamber. In other words, at least one side of the chamber which is arranged between the bottom cover and the top cover is closed by the at least one sidewall member. The at least one sidewall member preferably comprises a sidewall profile, in particular the sidewall member comprises a sidewall frame profile which not only closes an area between the bottom cover and the top cover but also provides structural stiffness to the housing.

The at least one sidewall member comprises a channel inside the sidewall member and apertures connecting the chamber with the channel, wherein the apertures are arranged in a top half of the channel (next to the top cover) such that at least a bottom half of the channel (next to the bottom cover) is adapted for collecting solid matter. In other words, at least the bottom half of the channel is adapted as a collecting channel, preferably a collecting tray. The apertures which connect the chamber with the channel inside the sidewall member can be referred to as perforations through an inner wall of the sidewall member, wherein, despite the apertures, the inner wall separates the chamber from the channel. The apertures are arranged in a top half of the channel, which means that the apertures do not extend below the top half of the channel. Therefore, at least the bottom half of the channel is separated from the chamber by the closed inner wall of the at least one sidewall member. Preferably, the apertures are arranged in a top third of the channel, particularly in a top quarter of the channel, which means that the apertures do not extend below the top third or top quarter of the channel. Therefore, preferably at least bottom two thirds of the channel, particularly at least bottom three quarters of the channel are adapted for collecting solid matter. Therefore, at least the bottom two thirds of the channel, particularly at least the bottom three quarters of the channel are separated from the chamber by the closed inner wall of the at least one sidewall member. Preferably, the apertures are only arranged in (in other words, restricted to) a top (upper) half, third or quarter of the channel. Therefore, the at least bottom (lower) half, two thirds or three quarters of the channel are separated from the chamber such that a collecting channel is realized. The collection of solid mater within the channel is facilitated as the channel also functions as an expansion chamber which slows down a venting gas flow exiting the apertures.

The terms "top half", "top third", "top quarter", "bottom half", "bottom two thirds" or "bottom three quarters" denominate portions of the channel. The top half together with the bottom half, the top third together with the bottom three thirds and/or the top quarter together with the bottom three quarters of the channel form one (single) channel. Thus, gas and/or solid matter can move between the top and bottom portions of the channel. Therefore, it is enabled, that the venting gas enters the channel via the top half, top third or top quarter of the channel and that solid matter settles to the bottom of the channel inside the bottom half, bottom two thirds or bottom three quarters.

The battery system is adapted such that in case of a thermal runaway venting gas vented from at least one of the battery cells is directed along at least one venting path leading from the chamber, through at least one of the apertures and the channel within the at least one sidewall member to an environment of the battery system. In other words, the battery system comprises at least one venting path which leads from the chamber to an environment of the battery system and is adapted to direct the venting gas vented from at least one of the battery cells through at least one of the apertures and the at least one sidewall member out of the battery system. The venting path may comprise a conduit or a plenum downstream the channel. As described above, the apertures are arranged in a top half of the channel such that at least a bottom half of the channel is adapted for collecting solid matter. In case of a thermal runaway, the venting gas typically carries solid matter along. A significant portion of solid matter which is carried by the venting gas along the at least one venting path settles in the bottom half of the channel within the at least one sidewall member after it passed through the apertures. The venting gas without or at least with less solid matter is further directed out of the channel and out of the battery system. As the solid matter may comprise graphite particles (dust) and/or metallic fragments, the risk of a short circuit within the battery system or of a propulsion system in the environment of the battery system is significantly reduced due to the invention.

Preferably a height of the channel is at least 70 %, more preferred at least 80 %, particularly preferred at least 90 % of a height of the chamber between the bottom and top cover. Particularly preferred, the channel comprises the same height as the chamber. The height of the channel is the sum of the height of the bottom half plus the height of the top half, the sum of the height of the bottom two thirds plus the height of the top third or the sum of the height of the bottom three quarters plus the height of the top quarter of the channel. The height of the channel and the chamber may be measured perpendicular to the bottom cover and/or the top cover. The higher the channel, the better the possible separation of solid matter on the bottom of the channel, as the velocity at the bottom of the channel is less if the channel is higher.

Besides the apertures, the chamber preferably is a hermetically (airtight) sealed chamber in order to protect the battery cells from environmental influences. Thus, the apertures may provide the only fluid connection between the chamber and an environment of the chamber and/or battery system.

The top of the chamber and the top of the channel point to the same direction. Further, the bottom of the chamber and the bottom of the channel point to the same direction.

According to a preferred embodiment of the invention, the at least one sidewall member comprises at least one gas guiding means, preferably arranged inside the channel of the at least one sidewall member, wherein the at least one gas guiding means is adapted to deflect the venting gas exiting the chamber through at least one of the apertures into a longitudinal direction of the channel along the at least one venting path. In other words, the at least one gas guiding means directs the venting gas which exits the chamber via the aperture into a downstream direction of the at least one venting path. Thereby, the venting gas and with it the solid matter, are hindered from being swirled in a way such that the solid matter re-enters the chamber upstream the channel and the at least one venting path. However, the gas guiding means within the channel induces a vortex into the venting gas flow coming from upstream the gas guiding means through the channel and thereby facilitates the separation of the solid matter within the channel. Due to the vortex the solid matter is pushed against the sidewall profile where it is slowed down and sinks to the bottom of the channel.

According to a further preferred embodiment of the invention the at least one gas guiding means partially covers the at least one aperture and extends from an upstream edge of the at least one aperture into the channel. In other words the at least one gas guiding means covers an upstream edge of the corresponding aperture and protrudes at an angle from the inner wall of the sidewall member, which separates the chamber from the channel. Due to this preferred embodiment, the aperture is shielded by the at least one gas guiding means from venting products comprising venting gas and solid matter coming along the at least one venting path from upstream the channel. In other words, venting products which stream along the channel are hindered by the at least one gas guiding means to re-enter the chamber via an aperture arranged downstream the channel.

The terms "downstream" and "upstream" refer to a streaming direction of the venting path starting in the chamber and ending in an environment of the battery system.

Preferably, the at least one gas guiding means comprises a fin. The fin can also be referred to as a blade, preferably as a guide blade. Thereby, the at least one gas guiding means can be realized in a simple and cost effective way.

Further preferred, the at least one gas guiding means is integrally formed with the at least one sidewall member. For example the gas guiding means could be partially stamped out of the at least one sidewall member, particularly of the inner wall of the at least one sidewall member, and be bent into the channel. Thereby costs of production are further reduced.

According to a preferred embodiment of the invention, a hollow space is provided between the battery cells and the top cover. In case of a thermal runaway, the venting products stream through the hollow space to the apertures of the at least one sidewall member.

Preferably, a venting opening of each of the plurality of battery cells points to the top cover. In other words, the top cover preferably is the cover of the battery housing to which the venting opening of each of the plurality of battery cells points. Thereby in case of a thermal runaway event, the venting products are vented from a corresponding battery cell on a direct way to the apertures and preferably directly into the hollow space between the battery cells and the top cover. Further, an upward direction within the battery system may be defined as a direction to which the venting openings of the plurality of battery cells point. Each venting opening may comprise a membrane which bursts at a predetermined pressure inside the battery cell. Alternatively or additionally the upward direction within the battery system may be defined as a direction to which (electrode) terminals of the plurality battery cells point.

According to a preferred embodiment of the invention, the chamber comprises at least two sub chambers. Preferably the at least two sub chambers are thermally insulated and/or gas tightly separated. More preferred, the battery housing comprises at least one partition wall, wherein the at least one partition wall extends from the at least one sidewall member through the chamber such that the chamber is separated into at least two sub chambers. The at least one partition wall provides a thermally insulating and/or gas tight barrier between the at least two sub chambers. Due to the separation of the chamber into at least two sub chambers by the partition wall, a thermal runaway within one of the sub chambers is hindered from propagating into another sub chamber. A further advantage of this preferred embodiment can be seen in containing the venting products within the corresponding sub chamber. Thereby, the separated hollow space between the battery cells and the top cover realizes pipes through which the venting products are directed to the channel of the at least one sidewall member via the apertures. Thus, venting gas and electrically conductive solid matter is hindered from reaching an adjacent sub chamber such that a short circuit of battery cells within the adjacent sub chamber is prevented.

Preferably, the at least one sidewall member is comprised of two sidewall members, preferably extending along opposite outer boundaries of the chamber. In other words, the chamber is arranged between the two sidewall members. Thereby, venting products of at least one of the battery cells within the chamber can exit the chamber through both sidewall members. In case that the preferred partition wall is provided, the partition wall extends through the chamber from one of the sidewall members to the other sidewall member.

According to a preferred embodiment of the invention, the at least one sidewall member comprises at least one aperture venting valve, wherein the at least one aperture venting valve closes at least one of the apertures. Preferably, the aperture venting valve is adapted to open at a predetermined pressure inside the chamber or at a predetermined pressure difference between the chamber and the channel (wherein the higher pressure is within the chamber). In other words, the at least one aperture venting valve is a venting valve which closes an aperture and opens under over pressure of a battery cell in thermal runaway (the venting gas pressure opens the aperture venting valve). Thereby, the venting gas expands into the sidewall frame profiles. Due to the at least one aperture venting valve venting gas and solid matter within the channel is prevented from entering the chamber. Further preferred, each of the apertures is closed by an aperture venting valve.

The aperture venting valves are especially beneficial, if the chamber is separated into sub chambers. In that case only the at least one aperture venting valve of a sub chamber which accommodates a battery cell (or a battery cell row) affected by a thermal runaway is opened. The at least one opened aperture venting valve enables an expansion of the venting gas into the channel of the sidewall frame profile. Due to this activation of the dedicated at least one aperture venting valve, only the battery cells within the thermal runaway sub chamber (section) will be polluted. In case that each aperture is provided with an aperture venting valve, the remaining sub chambers and the battery cells accommodated therein will not be polluted, as they are still sealed by the aperture venting valves which remain closed such that the not affected sub chambers remain separated from the channel.

Preferably, the battery housing comprises at least one housing opening or at least one housing venting valve. For example, the housing can comprise one or two housing openings or one or two housing venting valves. The at least one housing opening is especially preferred, if all apertures are closed by the aperture venting valves, as the chamber is already sealed by the aperture venting valves. In that case the venting path exits the battery housing through the at least one housing opening. This has the effect, that no back pressure is created within the channel. Thereby the opening of the aperture venting valves of an affected sub chamber is facilitated while an unwished opening of a not affected sub chamber is prevented.

The at least one aperture venting valve may comprise a membrane which closes the aperture. Preferably, the membrane is adapted to burst at a predetermined pressure inside the chamber or a predetermined pressure difference between the chamber and the channel.

Preferably, the housing venting valve is adapted such that it opens at a predetermined pressure within the chamber, wherein the predetermined pressure is less than a pressure needed to open the at least one aperture venting valve. Thereby it is ensured, that the aperture venting valves of unaffected sub chambers are not opened accidentally by the over pressure within the channel created by a thermal runaway in an affected sub chamber.

Preferably, the membrane comprises a foil, more preferred an aluminum or plastic foil. The plastic foil can comprise polytetrafluoroethylene (PTFE).

According to a preferred embodiment of the invention, the membrane is adapted to melt at a temperature higher than 100 °C, more preferred higher than 200 °C, especially preferred higher than 300 °C. Thereby a melting of the membrane due to the temperature of the venting gas inside the channel of the at least one sidewall member is prevented, such that apertures of sub chambers which are not affected by the thermal runaway stay closed.

The aperture venting valve and preferably the membrane may completely close and thus seal the aperture. Alternatively the membrane may comprise a perforation. Due to the perforation the aperture is not completely closed by the membrane but partially closed, preferably mostly closed. Due to the perforation a gas flow from the chamber to the channel is enabled even before the membrane bursts. The gas flow through the perforation facilitates a weakening or even a melting of the membrane as it facilitates hot venting gas to reach the membrane. Preferably, an area of the perforation is less than 5 %, more preferred less than 2 %. Further preferred, a melting point of the material of the membrane is lower than the temperature of the venting gas which passes the perforation but higher than the temperature of the venting gas after its expansion into the channel. Thereby a melting of membranes of sub chambers, which are not affected by the thermal runaway is prevented. Instead of the perforation the membrane may be slotted. Thus, the membrane may comprises a slit, which on the one hand enables the gas flow through the membrane but on the other hand enhances the separation of the chamber from the channel if compared to a perforation. This is because the slit is substantially closed as long as there is no over pressure inside the chamber.

Preferably, the at least one sidewall member comprises at least one membrane, wherein the at least one membrane at least partially closes at least one of the apertures and is adapted to melt at or above a predetermined temperature and thereby to open the at least one aperture. The predetermined temperature is a temperature reached if at least one battery cell within the chamber vents venting gas. The membrane may comprise the perforation or may be slotted as described above.

According to a preferred embodiment of the invention, the at least one sidewall member comprises an outlet port, preferably arranged downstream of the apertures of the channel, more preferred at a downstream end of the channel, wherein the outlet port is arranged in the top half of the channel. In other words, the outlet port does not extend below the upper half of the channel. Thus, the outlet port is only arranged in the top half of the channel (restricted to the top half of the channel). At least the bottom half of the channel may be closed. The bottom half of the channel preferably is closed by a retention wall of the at least one sidewall profile. In other words, the venting gas of the venting products can only be exhausted from the channel through the outlet port, which is arranged in a top half of the channel. Thus, the retention wall which closes at least the bottom half of the sidewall profile hinders the solid matter from exiting the channel. Preferably the outlet port is arranged in the top third, more preferred in the top quarter of the channel such that at least two bottom thirds, more preferred three bottom quarters of the channel are closed, preferably by the retention wall of the at least one sidewall profile

Further preferred, the at least one sidewall member comprises at least one rib, preferably a plurality of ribs, arranged inside the bottom half of the channel transverse to a longitudinal direction of the channel. The at least one rib extends from the bottom of the channel upwards and blocks the channel up to a height of the at least one rib. Thereby, solid matter which gets carried with the venting gas along the channel sinks to the bottom of the channel due to gravity and gets caught by the ribs, which are arranged transvers to the longitudinal direction of the channel and thus transverse to the at least one venting path. Preferably the ribs are arranged perpendicularly to the longitudinal direction of the channel.

According to another preferred embodiment of the invention, the battery system comprises a particle separator arranged in the at least one venting path downstream of the channel. The particle separator may be arranged outside the battery housing but is preferably arranged within the battery housing. The particle separator is adapted to separate solid matter, which may still be present in the venting gas after leaving the channel, from the venting gas.

Preferably, the particle separator is a centrifugal separator. Centrifugal separators are also known as cyclone separators. The centrifugal separator uses a centrifugal force to separate the solid matter from the venting gas.

Further preferred, the centrifugal separator is adapted to create a vortex around a center axis of the centrifugal separator such that solid matter carried along by the venting gas is separated from the venting gas radially while the venting gas exits the centrifugal separator axially along the center axis of the centrifugal separator. When the solid matter is separated from the venting gas radially, the solid matter may still comprise a tangential component of velocity. Due to the specific mass (density) of the solid matter which is higher than the specific mass of the venting gas, the solid matter is thrown against an outer housing of the centrifugal separator, gets slowed down and consequently is separated from the venting gas stream. The venting gas exits the centrifugal separator along the center axis in the center of the vortex, while the solid matter cannot follow the venting gas due to its (specific) mass.

The center axis preferably is a vertical axis. Particularly preferred, the venting gas exits the centrifugal separator along the center axis in an upward direction. Due to this embodiment, it is even more likely to separate solid matter from the venting gas, as solid matter would have to be carried away by the venting gas against gravity.

The battery cells are rechargeable or secondary battery cells. The battery system is suitable to power a propulsion system of a battery electric vehicle or a hybrid electric vehicle. The battery of the battery system can be denominated as a traction battery, preferably an electric-vehicle battery (EVB).

Preferably, the battery system, particularly the battery housing, comprises a substantially flat shape. In other words, a height of the battery system, particularly of the battery housing, is smaller than its width or length. Preferably the height is less than a third, particularly less than a quarter of the width or length. In order to accommodate a sufficient number of battery cells within the battery housing despite the flat shape, a length and a width of the battery housing are relatively large compared to its height. This is advantageous as it allows for a relatively long at least one sidewall member and thus a relatively long channel inside the at least one sidewall member. The longer the channel, the better its effect in separating solid matter.

According to another aspect of the present disclosure, a vehicle including a battery system as defined above is provided. The battery system is preferably integrated into an underbody construction of the vehicle which allows the battery system to have a substantially flat shape. The vehicle is advantageous as in case of a thermal runaway an amount of exhausted solid matter, which may comprise electrically conductive dust is significantly reduced. Thereby an occurrence of short circuits is largely reduced or prevented.

Preferably, the at least one venting path exits the vehicle in front of a passenger cabin of the vehicle. Thereby, the venting products exit the battery system into a front section and/or engine bay of the vehicle, i.e. an automobile or car, for save access to the passenger cabin and rear trunk.

Further a battery system comprising a plurality of battery cells is provided, wherein the battery system comprises a venting path leading from a chamber which accommodates a plurality of battery cells, to an environment of the battery system, wherein the battery system comprises a centrifugal separator within the venting path. Preferably the centrifugal separator comprises at least one of the features related to the centrifugal separator described in this disclosure.

Further, a centrifugal separator for a battery system is provided. Preferably the centrifugal separator comprises at least one of the features related to the centrifugal separator described in this disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view and sectional views of a battery system according to a preferred embodiment;
- Fig. 2: illustrates a schematic top view and sectional views of a battery system according to another preferred embodiment; and
- Fig. 3: illustrates a schematic top view of a vehicle comprising the battery system according to a preferred embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

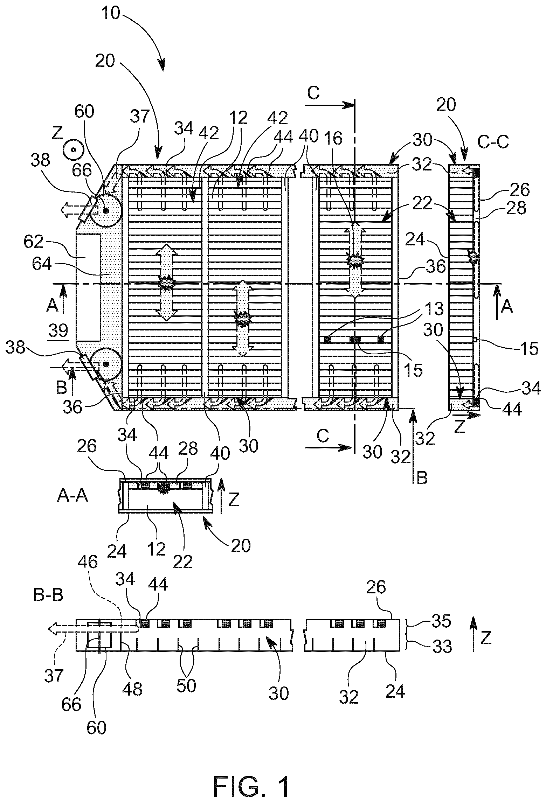

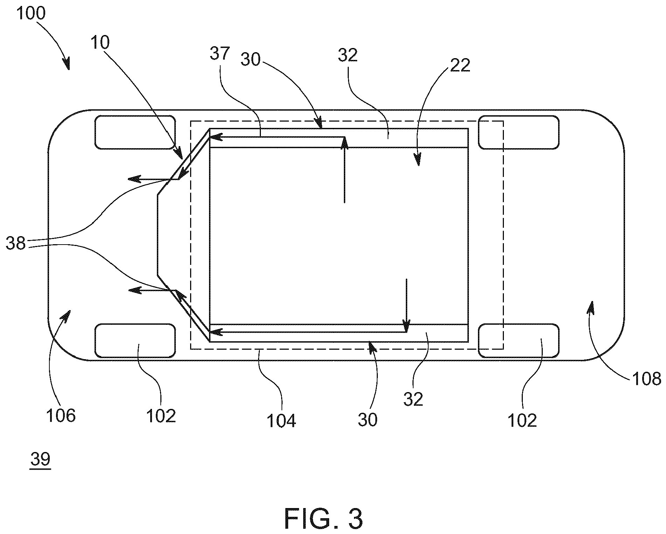

Figure 1 illustrates a schematic top view and sectional views A-A, B-B and C-C of a battery system 10 according to a preferred embodiment. The battery system 10 is suitable for a vehicle 100 (see Fig. 3) and comprises a plurality of battery cells 12 and a battery housing 20 (a battery pack housing).

The battery housing 20 comprises a chamber 22 arranged (sandwiched) between a bottom cover 24 (a battery bottom cover plate) and a top cover 26 (a battery cover plate) of the battery housing 20, wherein the chamber 22 accommodates the plurality of battery cells 12. The top cover 26 can be named as an upper housing cover and the bottom cover 24 can be named as a lower housing cover. The battery cells 12 are arranged inside the chamber 22 such that a hollow space 28 is provided between the battery cells 12 and the top cover 26.

According to this example the battery cells 12 are prismatic battery cells 12, arranged in rows. Each battery cell 12 comprises two terminals 13 (electrode terminals) which are connected with electrodes (not shown) of the battery cell 12. The terminals 13 are electrically connected in parallel and/or in series (not shown). The terminals 13 of the battery cells 12 point to an upper direction along a z-axis, thus the terminals 13 point into a z-direction and to the top cover 26.

The battery cells 12 each comprise a venting opening 15 for allowing venting products produced in an abnormal operation condition, also known as a thermal runaway 16 or a thermal event, to be released from the battery cells 12 if a certain overpressure and/or a certain temperature inside affected battery cells 12 is exceeded. This vent opening 15 is usually covered by a membrane (not shown) that bursts open if a pressure inside the battery cell 12 exceeds a predetermined pressure threshold. The position of the vent openings 15 relative to the battery cells 12 can be used to define the z-axis, in detail, the vent openings 15 point to the direction of the z-axis and the top cover 26. With other words, the venting openings 15 point to an upper direction. In the top view of Fig. 1 the z-axis points out of the drawing plane, in the partial sectional view A-A and sectional view B-B the z-axis points upwards the drawing plane and in the sectional view C-C the z-axis points to the right side of the drawing plane. The terms "top", "bottom", "upper" and "lower" are defined according to the z-axis. For example, the top cover 26 is positioned at the upper part of the z-axis, whereas the bottom cover 24 is positioned at the lower part thereof. According to the shown embodiment, the terminals 13 and/or venting openings 15 of all battery cells 12 of the battery system 10 are arranged on top of the battery cells 12 and thus point to the same direction (the z-direction). Thus, the terminals 13 and/or venting openings 15 of all battery cells 12 of the battery system 10 point to the top cover 26.

The battery housing 20 comprises at least one sidewall member 30, which connects the bottom cover 24 and the top cover 26. The at least one sidewall member 30 extends along an outer boundary of the chamber 22 and comprises a channel 32 inside the at least one sidewall member 30. The sidewall member 30 is a sidewall frame profile which improves a structural stiffness of the battery housing 20. The at least one sidewall member 30 comprises apertures 34 (openings) connecting the chamber 22 with the channel 32. The apertures 34 are arranged in a top half 35 of the channel 32 next to the top cover 26 such that at least a bottom half 33 of the channel 32 is adapted for collecting solid matter. The top half 35 of the channel is positioned at the upper part of the z-axis, whereas the bottom half 33 of the channel is positioned at the lower part thereof. The apertures 34 perforate an inner wall (arranged between the channel 32 and the chamber 22) of the at least one sidewall member 30 such that a fluid connection between the chamber 22 and the at least one channel 32 is established. At least a bottom half 33 of the perforated inner wall of the sidewall member 30 separates the chamber 22 from the channel 32. This is because at least the bottom half 33 of the inner wall does not comprise any apertures and thus at least the lower half 33 of the channel 32 is airtight separated from the chamber 22. As the apertures 34 are only arranged in the top half 35 of the channel 32, a collecting channel is realized by at least the bottom half 33 of the channel 32 (see sectional view B-B).

According to the embodiment shown in Fig. 1, the at least one sidewall member 30 is comprised of two sidewall members 30 extending along opposite outer boundaries (opposite outer sides) of the chamber 22, wherein both sidewall members 30 connect the bottom cover 24 with the top cover 26. Each of the two sidewall members 30 comprises the features and functionality of the herein described "at least one sidewall member 30". Also, if features are described in relation to both sidewall members 30, these features are also applicable to just one single sidewall member 30 or the "at least one sidewall member 30". A front side and a rear side of the chamber 36 can be closed by two endwall members 36. The two endwall members 36 extend along opposite outer boundaries of the chamber 22. Each of the two endwall members 36 connects the two sidewall members 30 and connects the top cover 26 and the bottom cover 24 with each other. Alternatively, instead of the two endwall members 36 two further sidewall members 30 each comprising a channel 32 and apertures 34 can be used to close the chamber 22 (not shown).

While regular operating conditions, the battery housing 20 encloses the battery cells 12 in an essentially gas tight manner. However, in case of a thermal runaway 16, venting gas is vented from at least one of the battery cells 12 and has to be exhausted out of the chamber 22 and the battery housing 20 in order to avoid damage to the battery housing 20 and a further propagation of the thermal runaway 16. Therefore, the battery system 10 is adapted such that in case of a thermal runaway 16, a venting gas which is vented from at least one of the battery cells is directed along at least one venting path (37 - the venting path extends along the arrows in Figs. 1 to 3) leading out of the battery system 10. As the embodiment shown in Fig. 1 comprises two sidewall members 30, each comprising a channel 32, two venting paths 37 are realized. Each of the venting paths 37 leads from a battery cell 12 in thermal runaway inside the chamber 22, through the apertures 34 and the channel 32 inside the at least one sidewall member 30 to an environment of the battery system 10. The venting path 37 exits the battery housing 20 through a housing venting valve 38 which is closed while regular operating conditions and is opened in case of a thermal runaway 26, for example by an increased internal pressure within the battery housing 20. Such opening shall also allow for draining away the venting gas safely in order to protect persons from fumes that may occur during the thermal runaway 26 (venting) or other dysfunctions of battery cells within the battery housing 20. The housing venting valve 38 connects the at least one venting path 37 with an environment 39 of the battery system 10.

As can be seen in Fig. 1 each of the venting paths is branched in order to penetrate the inner walls of the sidewall members 30 through the apertures 34.

Due to the high pressures and temperatures inside a battery cell 12 while a thermal runaway 16, solid matter, especially graphite powder and/or metallic fragments originating from the electrodes of the battery cells 12 get carried away with the venting gas. Graphite powder and metallic fragments pose a risk for short circuits within the battery system 10 or a vehicle including the battery system 10. If a short circuit is caused by an Aluminum fragment, there is the chance, that the Aluminum fragment melts and subsequently the short circuit is opened. However, in the case of graphite powder, there is the risk that when graphite powder closes a short circuit, the graphite powder sinters and the short circuit is maintained. Thus, on the one hand it is important to release the venting gas out of the battery system, while on the other hand the solid matter should be retained within the housing and at the same time kept away from electric and electronic components.

Therefore, according to one aspect of the invention, when the venting gas is guided along the venting path 37 through the battery system 10, solid matter which is carried away by the venting gas settles within the channels 32 of the sidewall members 30. This is possible, because the apertures 34 are arranged in a top half 35 of the channel 32 such that at least a bottom half 33 of each channel 32 is adapted as a collecting channel collecting solid matter. The venting gas which carries the solid matter into the channels 32 flows through the apertures 34 at a relatively high velocity. When the venting gas enters the channels 32 through the apertures 34, the venting gas expands and therefore its velocity is reduced. The reduction of velocity promotes a gravity driven separation of solid matter from the venting gas within the channels 32. Therefore, the sidewall members 30 and their channels 32 act as expansion chambers to slow down the venting gas flow as well as a container to store metallic parts and graphite escaping the battery cells 12 in a thermal runaway 16.

The battery housing 20 comprises partition walls 40, wherein the partition walls 40 extend from the at least one sidewall member 30 through the chamber 22 such that the chamber 22 is separated into at least two sub chambers 42. As can be best seen in the top view of Fig. 1, multiple partition walls 40 connect the two sidewall members 30, such that the partition walls 40 are arranged between sub chambers 42. The partition walls 40 separate the sub chambers 42 in a thermally isolating and gas tight manner. Therefore, the partition walls 40 prevent any sort of thermal propagation to the remaining (not affected) cell rows and contain the thermal runaway 16 within one of the sub chambers 42, such that for example just one single sub chamber 42 is affected. Thereby a thermal propagation through the whole battery can be prevented. Also the top cover 26 is shielded by a thermal resistant plate, which also provides an electric isolation and is placed on the inside of the battery housing 20. The partition walls 40, which are frame parts inside the battery housing 20, also separate the hollow space 28 provided between the battery cells 12 (a cover of the battery cells 12) and the top cover 26 into venting pipes above the individual rows of battery cells 12. Due to these venting pipes, only the battery cells 12 within the thermal runaway sub chamber 42 will be polluted as the venting products are guided within the venting pipes. The remaining cell rows within the remaining sub chambers 42 will not be polluted. The partition walls 40 can be realized by cell holders. The first portion of venting gas which exits a battery cell 12 is clean and builds up an internal pressure within the sub chambers 42 that are not affected by the thermal runaway. Thus, following (dusty) venting gas comprising the solid matter will not enter those other sub chambers 42 which remain clean (unpolluted).

The sidewall members 30 comprise gas guiding means 44 arranged inside the channels 32 and thus, inside the sidewall members 30. The gas guiding means 44 are adapted to deflect the venting products exiting the chamber 22 through the apertures 34 into a longitudinal direction of the channels 32 along the at least one venting path 37 (see the bent arrows in the top view of Fig. 1). According to the embodiment shown in Fig. 1, the gas guiding means 44 can comprise fins 44. The gas guiding means 44 partially cover the apertures 34 and extend from an upstream edge of each aperture 34 into the channels 32. Besides deflecting the venting products exiting the chamber 22 into the direction of the channels 32, the gas guiding means 32 have the effect to hinder solid matter which is carried along the channel 32 with the venting gas to enter a downstream arranged aperture 34 and a corresponding sub chamber 42. Without the gas guiding means 44 solid matter expelled by an upstream (related to the venting path 37) sub chamber 42 could intrude into a downstream sub chamber 42 which may not be affected by the thermal runaway 16 and could cause a short circuit. Due to the gas guiding means 44 the intrusion of solid matter into a downstream aperture 34 and/or sub chamber 42 is prevented or at least reduced.

The gas guiding means 44 are integrally formed with the at least one sidewall member 30. The sidewall member 30 is a hollow aluminum profile and the fins 44 are stamped out from a wall of the sidewall member 30. More specifically, each fin 44 is stamped along a circumference of the fin 44 and/or aperture 34 except an upstream edge of the fin 44 and aperture 32. After stamping, the fins 44 are bent inwards the channel 32 such that the fins 44 are angled to the wall of the sidewall profile 30.

Sectional view B-B of Fig. 1 is a view along one of the venting paths 37 downstream the chamber 22. As can be best seen in the sectional view B-B of Fig. 1, the sidewall members 30 each comprise an outlet port 46 arranged downstream the apertures 34 at a downstream end of each channel 32, wherein the outlet port 46 is arranged in a top half 35 of the channel 32 such that at least a bottom half 33 of the channel 32 is closed by a retention wall 48 of the at least one sidewall profile 30. The retention wall 48 facilitates the retention of solid matter within the channels 32 as it closes at least the bottom half 33 of the channel 32. In the sectional view B-B of Fig. 1 the outlet port 46 is arranged directly above the retention wall 48. The outlet port 46 can be realized by a gap between the retention wall 48 and the top cover 26 or by an opening through the retention wall 48.

The sidewall member 30 comprises ribs 50 arranged inside the bottom half 33 of the channel 32. The ribs 50 are arranged transverse to a longitudinal direction of the channel 32. The ribs 50 extend from a channel bottom upwards such that at least an upper half 35 of the channel 32 remains unblocked. The ribs 50 facilitate the retention of solid matter within the channels 32.

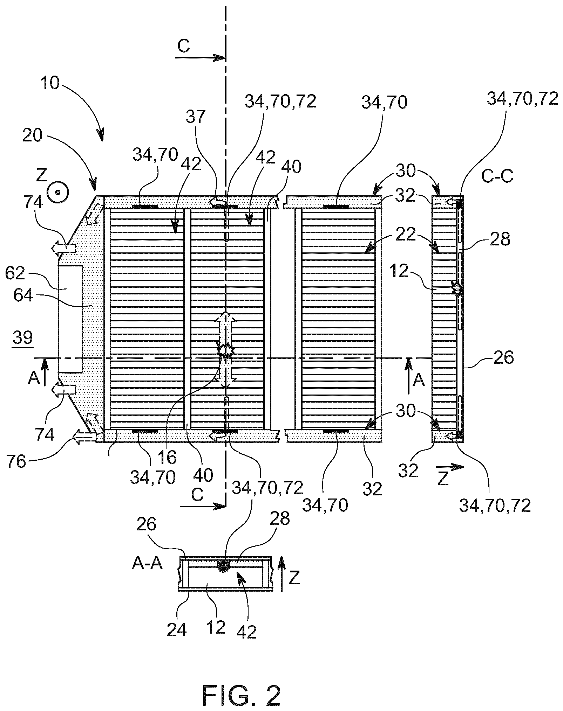

The battery system 10 further comprises particle separators 60, one arranged in each of the venting paths 37 downstream of the channels 32. Alternatively the battery system could comprise just one single particle separator 60 for both venting paths 37. In other embodiments (see Fig. 2), the particle separators 60 are omitted. The particle separators 60 are arranged inside the battery housing 20. For example, the particle separators 60 can be arranged on both sides of a junction box 62 within a separation area 64 (filter area). The separation area 64 acts as a filter and is arranged in a front section of the battery system 10. Alternatively, the particle separators 60 can be arranged outside the battery housing 20. The dotted area within the separation area 64 including the particle separators 60 symbolizes an area through which the venting gas including solid matter could flow within the separation area 64. For example, if the particle separators 60 are omitted, the whole dotted separation area 64 could be used for other particle separation means (not shown). If at least one particle separator 60 is provided, then the at least one particle separator 60 can be connected to the channel 32 of the at least one sidewall member 30 and to the housing venting valve 38 via conduits (not shown). In that case the venting path 37 would be adapted such that venting gas does not stream through the dotted area of separation area 64 outside the particle separators 60.

The particle separators 60 are centrifugal separators 60 adapted to create a vortex around a center axis 66, which is a vertical axis along the z-axis, such that solid matter is separated from the venting gas radially while the venting gas exits the centrifugal separator 60 axially along the center axis 66 in the center of the vortex. The vortex is created by the velocity of the vented gas, thus no motor is needed to create the vortex. The particle separator 60 effects a further reduction of solid matter exhausted by the battery system 10. The venting gas exits the centrifugal separator 60 along the vertical axis 66 in an upward direction, such that gravity further facilitates the separation of solid matter from the venting gas.

Figure 2 illustrates a schematic top view, a partial sectional view A-A and a sectional view C-C of a battery system 10 according to another preferred embodiment. The embodiment illustrated in Fig. 2 differs from the embodiment illustrated in Fig. 1 by the following features.

The two sidewall members 30 comprise aperture venting valves 70, wherein the aperture venting valves 70 close the apertures 34. The aperture venting valves 70 are adapted to open at a predetermined pressure difference between each sub chamber 42 and the channels 32.

The aperture venting valves 70 are membranes, for example foils, which close the apertures 34 and burst at a predetermined pressure difference between the corresponding sub chamber 42 and the channel 32.

Thus, the venting concept according to Fig. 2 comprises dedicated aperture venting valves 70 for each sub chamber 42 and therefore for each battery cell row. Further, venting paths 37 (symbolized by bold arrows) are formed by (top) covers of the cells 12, the partition walls 40 (cell holders), the top cover 26 of the battery (pack) housing 20, the sidewall members 30, which are realized by hollow sidewall frame profiles, and the separation area 64, which is a front section of the battery. Thereby contamination of remaining battery components, which are not directly affected by the thermal runaway 16, with graphite and metallic parts of the battery cell 12 during the thermal runaway 16 is prevented. Only the aperture venting valves 70, 72 of the branch with the battery cell 12 in thermal runaway 16 condition will be opened because of the gas pressure. The remaining, not affected branches remain close and therefore cannot be polluted.

The embodiment according to Fig. 2 may comprise one or two housing openings 74 which are always open (an always open section). The housing openings 74 connect the venting paths 37 with the environment 39 of the battery system 10. The venting path 37 is adapted such that a dedicated flow of the venting gas is starting at the battery cell 12 in thermal runaway 16 along the cell row, through the dedicated opened aperture venting valve 72, along the channel 32 in the inside of the sidewall member 30 and through the separation area (separation chamber) 64 exiting the battery system 10 through the housing openings 74. Alternatively to the housing openings 74, the battery housing 20 can comprise alternative housing openings 76, which are identical with the housing openings 74 except their position in the battery housing 20. The alternative housing openings 76 can be arranged immediately downstream the channel 32 such that the separation area 64 is mostly bypassed or no separation area 64 is provided. Although just one alternative housing opening 76 is depicted in Fig. 2, a second alternative housing opening 76 can be provided at a symmetrical position immediately downstream the channel 32 of the opposite sidewall member 30. The venting paths 37 do not have to be branched, for example if just one aperture 34 per sidewall member 30 and sub chamber 42 is provided - see Fig. 2. As the housing openings 74 or 76 cannot create a back pressure within the channels 32, the opening of those aperture venting valves 70 which seal a sub chamber 42 affected by a thermal runaway 16 is facilitated. The housing openings 74, 76 can comprise a grid (not shown) which covers the housing openings 74, 76. Thereby, animals are hindered from entering the battery housing 20 through the housing openings 74, 76. The grid can comprise a (relatively low) melting point such that it melts if venting gas exits the housing openings 74 via the grid. Thereby the grid cannot be obstructed by solid matter carried along by the venting gas.

As an alternative to the housing openings 74 or 76, the battery housing 20 can comprise at least one housing venting valve 38 (schematically shown in Fig. 1).

The housing venting valve 38 is adapted such that it opens at a predetermined pressure, wherein the predetermined pressure is less than a pressure needed to burst the membranes of the aperture venting valves 70. Thereby it is ensured, that the housing venting valve 38 opens, before membranes of aperture venting valves 70 of sub chambers 42 which are not affected by a thermal runaway 16 burst. Thus, independently of the choice of such an adapted housing venting valve 38 or housing opening 74 or 76 only those aperture venting valves 70, 72 of the cell row affected by the thermal runaway 16 are open, the others remain closed to seal the unaffected cell rows.

To sum up, the thermal separation of an affected cell row (sub chamber 42) from the remaining cell rows should prevent a burn down of the complete pack. To reduce the pressure within an affected sub chamber 42, the venting gas pressure opens the dedicated aperture venting valves 70, 72 of the cell row in thermal runaway condition. Thereby an expansion into the sidewall members 30 and further into an open exit like the housing openings 74, 76 reduces the overall pressure. The aperture venting valves 70 of the other cell rows remain closed and are not polluted by the dust carried along by the venting gas.

Figure 3 illustrates a schematic top view of a vehicle 100 comprising the battery system 10 according to a preferred embodiment. The vehicle 100 is an electric vehicle, wherein the battery system 10 is arranged in an underbody area of the vehicle 100. Alternatively the vehicle 100 could be a hybrid electric vehicle 100. The vehicle is an automobile (a car), thus comprises four wheels 102.

According to this embodiment, a z-axis of the vehicle 100 corresponds with the z-axis of the battery system 10. Both the z-axis of the vehicle 100 and of the battery system 10 point to an upper direction of the vehicle 100. As Fig. 3 shows a top view of the vehicle 100 and of the battery system 10, the z-axis of the vehicle 100 and of the battery system 10 are perpendicular to the drawing plane and points out of the drawing plane.

The venting paths 37 of the battery system 10 exit the vehicle 100 in front of a passenger cabin 104 of the vehicle 100. Thus, the venting gas exits the vehicle 100 through a front section 106, for example an engine bay, of the vehicle 100 for a save access to the passenger cabin 104 and rear trunk 108.

### Reference signs

- 10: battery system
- 12: battery cell
- 13: terminal
- 15: venting opening
- 16: thermal runaway
- 20: battery housing
- 22: chamber
- 24: bottom cover
- 26: top cover
- 28: hollow space
- 30: sidewall member
- 32: channel
- 33: bottom half of channel
- 34: aperture
- 35: top half of channel
- 36: endwall member
- 37: venting path
- 38: housing venting valve
- 39: environment
- 40: partition wall
- 42: sub chamber
- 44: gas guiding means / fins
- 46: outlet port
- 48: retention wall
- 50: ribs
- 60: particle separator / centrifugal separator
- 62: junction box
- 64: separation area
- 66: center axis
- 70: aperture venting valve
- 72: opened aperture venting valve
- 74: housing opening
- 76: alternative housing opening

- 100: vehicle
- 102: wheels
- 104: passenger cabin
- 106: front section
- 108: rear trunk

## Claims

1. A battery system (10) comprising a plurality of battery cells (12) and a battery housing (20), wherein the battery housing (20) comprises:
- a chamber (22) arranged between a bottom cover (24) and top cover (26) of the battery housing (20), wherein the chamber (22) accommodates the plurality of battery cells (12); and
- at least one sidewall member (30) connecting the bottom cover (24) and the top cover (26), wherein the at least one sidewall member (30) extends along an outer boundary of the chamber (22) and comprises a channel (32) inside the sidewall member (30) and apertures (34) connecting the chamber (22) with the channel (32), wherein the apertures (34) are arranged in a top half (35) of the channel (32) such that at least a bottom half (33) of the channel (32) is adapted for collecting solid matter;
wherein the battery system (10) is adapted such that in case of a thermal runaway (16), a venting gas vented from at least one of the battery cells (12) is directed along at least one venting path (37) leading from the chamber (22), through at least one of the apertures (34) and the channel (32) to an environment (39) of the battery system (10).

2. The battery system (10) of claim 1, wherein the at least one sidewall member (30) comprises at least one gas guiding means (44) arranged inside the channel (32) of the at least one sidewall member (30), wherein the at least one gas guiding means (44) is adapted to deflect the venting gas exiting the chamber (22) through at least one of the apertures (34) into a longitudinal direction of the channel (32) along the at least one venting path (37).

3. The battery system (10) of claim 2, wherein the at least one gas guiding means (44) partially covers the at least one aperture (34) and extends from an upstream edge of the at least one aperture into the channel (3).

4. The battery system (10) according to any one of claims 2 or 3, wherein the at least one gas guiding means (44) comprises a fin (44).

5. The battery system (10) according to any one of claims 2 to 4, wherein the at least one gas guiding means (44) is integrally formed with the at least one sidewall member (30).

6. The battery system (10) according to any one of the preceding claims, wherein a hollow space (28) is provided between the battery cells (12) and the top cover (26).

7. The battery system (10) according to any one of the preceding claims, wherein the battery housing (20) comprises at least one partition wall (40), wherein the at least one partition wall (40) extends from the at least one sidewall member (30) through the chamber (22) such that the chamber (22) is separated into at least two sub chambers (42).

8. The battery system (10) according to any one of the preceding claims, wherein the at least one sidewall member (30) is comprised of two sidewall members (30) extending along opposite outer boundaries of the chamber (22).

9. The battery system (10) according to any one of the preceding claims, wherein the at least one sidewall member (30) comprises at least one aperture venting valve (70), wherein the at least one aperture venting valve (70) closes at least one of the apertures (34) and is adapted to open at a predetermined pressure inside the chamber (22).

10. The battery system (10) according to any one of the preceding claims, wherein the at least one sidewall member (30) comprises an outlet port (46), wherein the outlet port is arranged in the top half (35) of the channel (32) such that at least the bottom half (33) of the channel (32) is closed by a retention wall (48) of the at least one sidewall profile (30).

11. The battery system (10) according to any one of the preceding claims, wherein the at least one sidewall member (30) comprises at least one rib (50) arranged inside the bottom half (33) of the channel (32) transverse to a longitudinal direction of the channel (32).

12. The battery system (10) according to any one of the preceding claims, wherein the battery system (10) comprises a particle separator (60) arranged in the at least one venting path (37) downstream of the channel (32).

13. The battery system (10) of claim 12, wherein the particle separator (60) is a centrifugal separator (60).

14. A vehicle (100) including a battery system (10) according to any one of the preceding claims.

15. The vehicle (100) of claim 14, wherein the at least one venting path (37) exits the vehicle (100) in front of a passenger cabin (104) of the vehicle (100).
